# EUROPÄISCHE PATENTANMELDUNG

(11) **EP 1 010 721 A1**
(43) Veröffentlichungstag der Anmeldung: **21.06.2000**
(21) Anmeldenummer: 99120901.6
(22) Anmeldetag: 28.10.1999
(51) Int. Cl.: C08K 3/04, C08J 3/03, D06M 15/643, C08L 83/07

(54) **Beschichtete Airbags, Beschichtungsmaterial und Beschichtungsverfahren**

(30) Priorität: 11.12.1998 DE 19857307
(71) Anmelder: Wacker-Chemie GmbH, 81737 München (DE)
(72) Erfinder: Müller, Johann, 94357 Konzell (DE); Stömmer, Martin, 84359 Simbach am Inn (DE)
(74) Vertreter: Fritz, Helmut, Dr.

(57) **Zusammenfassung**

Wäßrige Emulsionen, dadurch gekennzeichnet, daß sie
(1) in den endständigen Einheiten SiC-gebundene Gruppen mit aliphatischen Mehrfachbindungen aufweisende Organopolysiloxane,
(2) mindestens 3 Si-gebundene Wasserstoffatome aufweisende Organopolysiloxane,
(3) die Anlagerung von Si-gebundenem Wasserstoff an aliphatische Mehrfachbindungen fördernden Katalysator,
(4) als Haftungsvermittler geeignete organische Siliciumverbindungen,
(5) Siliconharze,
(6) Emulgator und
(7) Wasser,
(8) Ruß
   enthalten.

## Beschreibung

Die Erfindung betrifft wäßrige Emulsionen, ein Verfahren zur ihrer Herstellung, Massen, die herstellbar sind unter Verwendung dieser wäßrigen Emulsionen, ein Verfahren zur Beschichtung von organischen Fasern unter Verwendung derartiger wäßriger Emulsionen sowie mit diesen Emulsionen beschichtete textile Substrate.

In EP-A-758 666 werden wäßrige Emulsionen beschrieben, die additionsvernetzende Organopolysiloxane enthalten, die zur Beschichtung von Geweben für Airbags verwendet werden. Diese haben allerdings den Nachteil, daß die Brandgeschwindigkeit im horizontalen Brandtest nach FMVSS 302 oder 208 zu hoch ist.

Es ist Aufgabe der Erfindung, die Nachteile des Standes der Technik zu überwinden und insbesondere wäßrige Emulsionen zur Verfügung zu stellen, die auf ein tetxtiles Gewebe beschichtet, ein vermindertes Brandverhalten ergeben, insbesondere bei Airbags und zusätzlich ein geringes Beschichtungsgewicht, eine verbesserte Haftung der Beschichtung aufweisen und verbesserte Werte im Scrub Test nach ISO 5981 liefern und ein kostengünstiges Beschichtungsverfahren ermöglichen.

Gegenstand der Erfindung sind wäßrige Emulsionen, die dadurch gekennzeichnet sind, daß sie
(1) in den endständigen Einheiten SiC-gebundene Gruppen mit aliphatischen Mehrfachbindungen aufweisende Organopolysiloxane,
(2) mindestens 3 Si-gebundene Wasserstoffatome aufweisende Organopolysiloxane,
(3) die Anlagerung von Si-gebundenem Wasserstoff an aliphatische Mehrfachbindungen fördernden Katalysator,
(4) als Haftungsvermittler geeignete organische Siliciumverbindungen,
(5) Siliconharze,
(6) Emulgator
(7) Wasser und
(8) Ruß,
   enthalten.

Bei den Gruppen mit aliphatischen Mehrfachbindungen handelt es sich vorzugsweise um Vinylgrupppen oder Allylgruppen, wobei Vinylgruppen besonders bevorzugt sind.

Bei den in den erfindungsgemäßen endständigen Einheiten SiC-gebundenen Gruppen mit aliphatischen Mehrfachbindungen aufweisenden Diorganopolysiloxanen (1), handelt es sich vorzugsweise um beliebige Diorganopolysiloxane mit Vinylgruppen an den endständigen Einheiten, bevorzugt solche der allgemeinen Formel

(CH₂=CH)ₓSiR₃₋ₓ-O(SiR₂O)ₙSiR₃₋ₓ(CH=CH₂)ₓ

worin
R gleiche oder verschiedene Kohlenwasserstoffreste mit vorzugsweise 1 bis 18 Kohlenstoffatom(en) bedeutet, die substituiert sein können und
X 1, 2 oder 3, bevorzugt 1 und
n eine Zahl mit einem solchen Wert ist, daß die Diorganopolysiloxane (1) vorzugsweise eine durchschnittliche Viskosität von 100 - 500 000 mPa·s bei 25 °C haben.

Bevorzugt ist ein Bereich von 200 - 200 000 mPa·s bei 25 °C und besonders bevorzugt ein Bereich von 500 - 100 000 mPa·s bei 25°C.

Beispiele für Kohlenwasserstoffreste R sind vorzugsweise Alkylreste, wie der Methyl-, Ethyl-, n-Propyl-, Isopropyl-, Butyl-, Octyl-, Tetradecyl- oder Octadecylrest; cycloaliphatische Kohlenwasserstoffreste, wie der Cyclopentyl-, Cyclohexyl- oder Methylcyclohexylrest; Arylreste, wie der Phenylrest; Alkarylreste, wie Tolylreste; Aralkylreste, wie der Benzyl- oder Phenylethylrest. Als Beispiele für substituierte Kohlenwasserstoffreste können vorzugsweise halogenierte Reste, wie der 3,3,3-Trifluorpropyl-, 3-Chlorpropyl- oder Chlorphenylrest genannt werden. Auch Cyanalkylreste, wie der Cyanethylrest, können enthalten sein.

Reste mit ungesättigten aliphatischen Gruppen, wie vorzugsweise. der Vinyl-, Allyl-, Hexenyl- oder Cyclohexenylrest können ebenfalls enthalten sein.

Bevorzugt als Reste R sind Kohlenwasserstoffreste mit 1-10 Kohlenstoffatom(en), wobei besonders bevorzugt mindestens 80% der als R bezeichneten organischen Reste bevorzugt Methylreste sind.

Bei den genannten Organopolysiloxanen kann es sich um gleiche Mischpolymere oder um Gemische aus verschiedenen Mischpolymeren mit jeweils gleichem Polymerisationsgrad oder verschiedenem Polymerisationsgrad handeln. Wenn die Diorganopolysiloxane verschiedene Diorganopolysiloxaneinheiten enthalten, kann eine statistische Verteilung oder eine Blockverteilung vorliegen. Im erfindungsgemäßen Produkt ist das Diorganopolysiloxan (1) in Mengen von vorzugsweise 10-80 Gew.%, bevorzugt in Mengen von 20-60 Gew.%, besonders bevorzugt in Mengen von 20 bis 50 Gew.% enthalten.

Organopolysiloxane (2) mit mindestens 3 Si-gebundenen Wasserstoffatomen sind vorzugsweise solche der Formel

(CH₃)₃SiO-(SiHRO)ₒ-(SiR₂O)ₚ-Si(CH₃)₃,

wobei R die oben angegebene Bedeutung haben kann und o/p vorzugsweise im Verhältnis 1:0 bis 1:20, bevorzugt 1:0 bis 1:7 vorliegt. Die Summe aus o und p kann vorzugsweise zwischen 10-1000 betragen, bevorzugt beträgt sie 20-200, besonders bevorzugt beträgt sie 30-100.

Es können gleiche oder verschiedene Moleküle des Organopolysiloxans (2) eingesetzt werden.

Bei den mindestens 3 Si-gebundene Wasserstoffatome je Molekül aufweisenden Organopolysiloxanen sind die nicht mit durch Wasserstoff- und Siloxansauerstoffatome abgesättigten Siliciumvalenzen vorzugsweise durch Methyl-, Ethyl- oder Phenylreste abgesättigt. Es können jedoch alle, die oben als R beschriebenen Reste, enthalten sein.

Im erfindungsgemäßen Produkt ist Organopolysiloxan (2) vorzugsweise in Mengen von 1-40 Gew.%, bevorzugt in Mengen von 2-20 Gew.%, besonders bevorzugt in Mengen von 3-15 Gew.% enthalten.

Als die Anlagerung von Si-gebundenen Wasserstoff an aliphatische Mehrfachbindungen fördernde Katalysatoren (3) können beliebige Katalysatoren - die bekanntermaßen diese Reaktion fördern - eingesetzt werden.

Beispiele für derartige Katalysatoren sind vorzugsweise metallisches, fein verteiltes Platin (Platinsol), Ruthenium, Rhodium, Palladium oder Iridium. Diese Metalle können auch auf feste Träger, wie Siliciumdioxid, Aluminiumoxid oder Aktivkohle, keramische Materialien oder Mischoxide bzw. Mischhydroxide, aufgebracht sein. Auch Verbindungen bzw. Komplexe dieser Metalle wie
PtCl₄, H₂PtCl₆.6H₂O; Na₂PtCl₄.4H₂O Platin-Olefin-Komplexe, Platin-Alkohol-Komplexe, wie Speyers Catalyst, Platin-Alkoholat-Komplexe, Platin-Ether-Komplexe, Platin-Aldehyd-Komplexe, Platin-Keton-Komplexe, wie Umsetzungsprodukte aus Cyclohexanon und Hexachloroplatinsäure, Platin-Vinylsiloxan-Komplexe, insbesondere Platin-Divinyltetramethyldisiloxan-Komplexe mit oder ohne Gehalt an organisch gebundenem Halogen, Bis-(Gamma-Picolin)-Platindichlorid, Trimethylenpyridinplatindichlorid, Dicyclopentadienplatindichlorid, Dimethylsulfoxydiethylenplatin( 2)dichlorid, sowie die Umsetzungsprodukte aus in 1-Octen gelöstem Platintetrachlorid mit sek.-Butylamin.
Platinverbindungen sind als Katalysatoren im erfindungsgemäßen Produkt bevorzugt.
Es können Katalysatorgemische aber auch nur eine Art der oben genannten Katalysatoren eingesetzt werden.
Im erfindungsgemäßen Produkt können solche Mengen an Katalysatoren eingesetzt werden, daß im Falle von Platinkatalysatoren der Platingehalt im erfindungsgemäßen Gemisch vorzugsweise zwischen 3 und 500 ppm, bezogen auf den Siloxangehalt, liegt.
Bevorzugt wird ein Platingehalt von 10-200 ppm, bezogen auf die eingesetzten Polysiloxane eingesetzt.

Für die Herstellung von wäßrigen Emulsionen können beliebige Haftungsvermittler eingesetzt werden.

Als Beispiel für als Haftungsvermittler geeignete Organosiliciumverbindungen (4) werden vorzugsweise Silane mit hydrolysierbaren Resten und über Kohlenstoff an Silicium gebundene Vinyl-, Acryloxy-, Methacryloxy-, Epoxy- oder Säureanhydridgruppen eingesetzt. Auch Teilhydrolysate und/oder Mischhydrolysate solcher Silane können verwendet werden. Bevorzugt wird ein Umsetzungsprodukt aus Vinyltriacetoxysilan und dem Silan der Formel 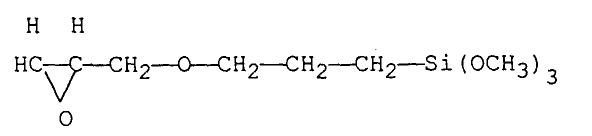 verwendet. Es kann eine Art von Haftungsvermittler verwendet werden aber auch Gemische aus zwei oder mehreren Silanen oder deren Umsetzungsprodukte, bzw. Teil- oder Mischhydrolysate können verwendet werden. Dieser Haftungsvermittler wird vorzugsweise in Mengen von 1 bis 20 Gew.%, bevorzugt in Mengen von 1 bis 10 Gew.% und besonders bevorzugt in Mengen von 2 bis 8 Gew.%, eingesetzt.

Die erfindungsgemäßen Produkte können wäßrige Emulsionen von Siliconharzen (5) vorzugsweise der allgemeinen Formel (R₃SiO_{1/2})ₐ(RSiO_{3/2})_{b}, sogenannte MT-Harze und/oder MQ-Harze der allgemeinen Formel (R₃SiO_{1/2})ₐ(SiO_{4/2})_{b}, enthalten, wobei R die oben angegebene Bedeutung hat und bevorzugt ein Methyl-, Phenyl-, Vinylrest oder Wasserstoff ist.

Das Verhältnis a zu b wird so gewählt wird, daß die Siliconharze in einem Viskositätsbereich von vorzugsweise 30-300 000 mPa·s bei 25 °C liegen. Bevorzugt werden Siliconharze im Viskositätsbereich von 50-30 000 mPa·s bei 25 °C, besonders bevorzugt im Viskositätsbereich von 50 bis 10 000 mPa·s bei 25°C gewählt.

Die erfindungsgemäß eingesetzten Organosiliciumverbindungen sind handelsübliche Produkte bzw. nach in der Silicon-Chemie üblichen Verfahren herstellbar.
Bei den erfindungsgemäß eingesetzten Organosiliciumverbindungen kann es sich jeweils um eine Art derartiger Organosiliciumverbindungen wie auch um ein Gemisch verschiedener Organosiliciumverbindungen handeln.
Für die Herstellung der wäßrigen Emulsionen, welche die oben genannten Bestandteile enthalten, können beliebige Emulgatoren (6) verwendet werden, die auch sonst zur Herstellung von Organopolysiloxanemulsionen verwendet werden. Bevorzugt sind nichtionische Emulgatoren.

Geeignete Emulgatoren sind vorzugsweise ionische und nichtionische Emulgatoren. Beispiele dafür sind Sulfonsäure und ihre Salze, die als Emulgator wirken können sowie Alkylsulfonate, wie Natriumlaurylsulfonat, mit aliphatischen Kohlenwasserstoffresten substituierte Benzolsulfonate, wie Natriumdodecylbenzolsulfonat, mit aliphatischen Kohlenwasserstoffresten substituierte Naphthalensulfonate, Polyethylenglycolsulfonat und Laurylphosphat, Polyethylenoxid, Polypropylenoxid, Mischpolymere aus Ethylen- und Propylenoxid, Stearate und Phosphate. Diese werden in Mengen von 3% bis 20% bezogen auf den Gesamtsilicongehalt eingesetzt.

Bei dem Ruß handelt es sich vorzugsweise um Gasruß, Furnaceruß oder Flammruß. Zusätzlich können vorzugsweise wäßrige Rußdispersionen, die im Handel unter den Bezeichnungen DERUSSOL, SCHWARZDISPERSION oder RUßDISPERSION von Degussa erhältlich sind, eingesetzt werden. Die Rußdispersionen können einen Feststoffgehalt von vorzugsweise 1 bis 50 Gew.% aufweisen. Die Primärteilchengröße der eingesetzten Ruße kann zwischen 10 und 100 nm liegen. Die Dispersionen können Anionisch, Nichtionisch oder gemischt, Anionisch / Nichtionisch stabilisiert sein. Der Rußgehalt liegt bezogen auf Siliconfestgehalt vorzugsweise zwischen 1 und 50 Gew.%, bevorzugt zwischen 3 und 40 Gew.-%, ganz besonders bevorzugt zwischen 5 und 20 Gew.%.

Zusätzlich zu den bisher genannten Bestandteilen können die erfindungsgemäßen Emulsionen noch vorzugsweise weitere Bestandteile, wie vorzugsweise Füllstoffe z.B. Aluminiumoxid, Aluminiumhydroxid, Pigmente und Stabilisatoren enthalten.

Ein weiterer Gegenstand der Erfindung ist ein Verfahren zur Herstellung der erfindungsgemäßen wäßrigen Emulsionen, dadurch gekennzeichnet, daß die Bestandteile (1) bis (8) emulgiert werden.

Bei dem erfindungsgemäßen Verfahren werden die Bestandteile:
(1) in den endständigen Einheiten SiC-gebundene Vinylgruppen aufweisende Organopolysiloxane,
(2) mindestens 3 Si-gebundene Wasserstoffatome aufweisende Organopolysiloxane,
(3) die Anlagerung von Si-gebundenem Wasserstoff an aliphatische Mehrfachbindungen fördernden Katalysator
(4) als Haftungsvermittler geeignete organische Siliciumverbindungen,
(5) Siliconharze,
(6) Emulgator,
(7) Wasser
(8) Ruß bei vorzugsweise Raumtemperatur (25°C) und vorzugsweise Normaldruck, miteinander emulgiert.
Es können aber auch fertige Emulsionen / Dispersionen von einzelnen Komponenten vermischt werden.

Das Verfahren kann auch bei reduziertem oder erhöhten Druck und einer erhöhten Temperatur bis auf vorzugsweise 80°C oder erniedrigter Temperatur bis vorzugsweise 0°C, wobei aber Raumtemperatur schon aus ökonomischen Gründen bevorzugt ist, erfolgen.

Ein weiterer Gegenstand der Erfindung ist ein Verfahren zur Beschichtung von textilen Substraten, dadurch gekennzeichnet, daß die erfindungsgemäßen wäßrigen Emulsionen auf ein Textil aufgebracht werden und die Emulsionen in einem Schritt auf textilen Substraten vulkanisiert und das beschichtete Textil getrocknet wird.

Bei dem erfindungsgemäßen Verfahren können die erfindungsgemäßen wäßrigen Emulsionen vorzugsweise auf nasse Textilien, die direkt aus einem Wasch- oder Reinigungsprozeß kommen, aufgebracht werden. Die Vulkanisation der Silikonbeschichtung und das Trocknen und Schrumpfen der Textilien kann in einem Arbeitsgang erfolgen.

Ein weiterer Gegenstand der Erfindung ist ein Vulkanisat herstellbar unter Verwendung einer erfindungsgemäßen wäßrigen Emulsion, die erwärmt wird.

Um eine vorzeitige Vernetzung zu vermeiden, werden die erfindungsgemäßen Emulsionen in mindestens zwei verschiedenen Komponenten aufbewahrt. Eine Komponente enthält vorzugsweise die Siloxane mit den ungesättigten aliphatischen Gruppen, eine andere Komponente enthält vorzugsweise die Siloxane mit an Sigebundenem Wasserstoff. Die entsprechenden Hilfs- und Zusatzstoffe können in einer oder in beiden der Komponenten enthalten sein.

Das Aufbringen der erfindungsgemäßen Produkte kann in üblicher Weise erfolgen. Beispiele hierfür sind: Tauchen und Foulardieren, Streichen, Gießen, Sprühen, Aufwalzen, Drucken, Rakeln, mit einem Meyer-Stab oder mit einer Luftbürste oder durch Pflatschen im Walzenauftrag und Siebdruck.

Das Aufbringen des Beschichtungsmaterials findet während des Waschprozesses oder direkt im Anschluß an den Waschprozeß statt.
Die Vulkanisation erfolgt in einem Arbeitsgang zeitgleich mit dem Trocknungs- und Schrumpfprozeß.

Bei Geweben, die gewaschen und getrocknet werden müssen, dies trifft insbesondere für Kunstfasergewebe zu, kann die erfindungsgemäße Zusammensetzung vorzugsweise direkt auf das noch nasse Gewebe sofort nach dem Waschvorgang aufgebracht werden. Die Vulkanisation erfolgt zeitgleich mit dem Trocknungsvorgang. Dies ist insbesondere bei Geweben, die zur Herstellung von Airbags verwendet werden, gewünscht und besonders vorteilhaft.

Nach dem Aufbringen nach den oben genannten Methoden, erfolgt die Trocknung und Vulkanisation des beschichteten Gewebes üblicherweise in einem Wärmekanal, der durch Heißluft, Infrarotlicht, Gasbrenner, Wärmetauscher oder andere Energiequellen beheizt werden kann. Um Blasenbildung zu vermeiden, wird in einer ersten Zone bei Temperaturen von vorzugsweise 60 - 150°C, bevorzugt 80 - 130°C, besonders bevorzugt 90 - 120°C, vorgetrocknet und in einer zweiten Zone bei vorzugsweise Temperaturen bis zu 300°C, vernetzt. Schon wegen der begrenzten Wärmebeständigkeit der meisten Kunstfasern ist ein Temperaturbereich von vorzugsweise 120-190°C bevorzugt. Die zur Vulkanisation benötigte Verweilzeit hängt vom Beschichtungsgewicht, von der Wärmeleitfähigkeit des Gewebes sowie vom Wärmeübergang auf das beschichtete Textil ab und kann zwischen 0,5 und 30 Minuten betragen. Die Trocknung und Vulkanisation kann außer in den meist üblichen Wärmekanälen auch durch andere technische Trocknungsanlagen, wie Heißwalzenkalander, beheizbare Kaschierpressen, beheizbare Plattenpressen oder heiße Kontaktwalzen sowie durch Schwebetrockner erfolgen. Auch durch Mikrowellen können die erfindungsgemäß beschichteten Textilien getrocknet und vulkanisiert werden.

Die erfindungsgemäßen Produkte können zur Beschichtung oder Ausrüstung von textilen Materialien aller Art verwendet werden. Es können Gewebe aller Webarten, Vliese, Gestricke, Gelege, Gewirke aus allen üblichen Garnen und Fasern, Naturfasern wie Baumwolle, Glas, Wolle, Seide, Kunstfasern, wie Polyamide, Polyester Viskose, Polyethylen, Polypropylen, Polyurethan, Seide, Viskose, Cellulose beschichtet werden. Die Einsatzgebiete dieser so ausgerüsteten Textilien sind vielfältig. Beispiele hierfür sind: Sportkleidung, Sportartikel, wie Segel, Bootsabdeckungen oder Materialien für Rucksäcke und Zelte und Schutzkleidung. Technische Anwendungen, wie Abdeckplanen, Förderbänder, Kompensatoren, faltbare Behälter.

Besonders vorteilhaft können nach dem erfindungsgemäßen Verfahren mit den erfindungsgemäßen Produkten ausgerüstete Polyamid- oder Polyestergewebe zur Herstellung von Airbags für Kraftfahrzeuge verwendet werden.

Technische Gewebe müssen meist gewaschen, getrocknet und geschrumpft werden, um den hohen Anforderungen gerecht zu werden. Dies trifft insbesondere bei der Verwendung zur Herstellung von Airbags zu. Alle bisher bekannten Beschichtungsverfahren benötigen nach dem Waschen und Trocknen einen separaten Beschichtungsvorgang. Nach dem erfindungsgemäßen Verfahren kann das erfindungsgemäße Beschichtungsmaterial direkt im oder nach dem Waschprozeß aufgebracht werden und während des Trocknungsvorgangs vulkansiert werden. Ein zusätzlicher Beschichtungsvorgang ist nicht mehr nötig. Dies bedeutet eine signifikante Einsparung von Energie, Zeit und Kosten.

Zur Herstellung von Airbags werden häufig beschichtete Gewebe verwendet. Erfindungsgemäß beschichtete Gewebe zeigen einige technische Vorteile. Die erfindungsgemäße Beschichtung bietet Schutz gegen die heißen Gase des Treibsatzes, Garn an Garn Reibung, die zur Reduktion der Reißfestigkeit führt und durch Vibrationen hervorgerufen wird, kann durch eine erfindungsgemäße Elastomerbeschichtung verhindert werden. Die erfindungsgemäße Beschichtung verleiht dem Gewebe eine bessere Alterungsbeständigkeit und Flammbeständigkeit.

Ein Vorteil des erfindungsgemäßen Beschichtungsverfahrens ist, daß die Kosten eines zusätzlichen Beschichtungsschrittes entfallen.
Erfindungsgemäß wird ein wäßriges Siliconsystem zur Verfügung gestellt, das direkt nach dem Waschvorgang auf das noch nasse Gewebe aufgebracht und während des Trocknungsvorganges vulkanisiert werden kann. Dieses erfindungsgemäße Beschichtungssystem ist ein wäßriges Siliconbeschichtungssystem, das nach der Vulkanisation exakt das für einen Airbag passende Eigenschaftsprofil aufweist.

### Beispiele:

### Beispiel 1:

4 000 g einer wäßrigen Emulsion, die 800 g eines Vinyldimethylsiloxyeinheiten als endständige Einheiten aufweisenden Dimethylpolysiloxanes mit einer Viskosität von 1 000 mPa·s, 800 g eines Vinyldimethylsiloxyeinheiten als endständige Einheiten aufweisenden Dimethylpolysiloxanes mit einer Viskosität von 20 000 mPa·s,
20 g eines Platin-Divinyltetramethyldisiloxan-Komplexes mit einem Gehalt von
   1 Gew.% Platin,
10 g Ethinylcyclohexanol,
90 g eines durch Trimethylsiloxygruppen endblockierten Diorganopolysiloxans mit 50 Mol% Methylhydrogensiloxaneinheiten und 50 Mol% Dimethylsiloxaneinheiten und einer Viskosität von 120 mPa·s sowie
150 g einer als Haftmittel geeigneten Organosiliciumverbindung, enthält,
die durch Umsetzung von 100 g Vinyltriacetoxysilan mit 130 g des Silans der Formel 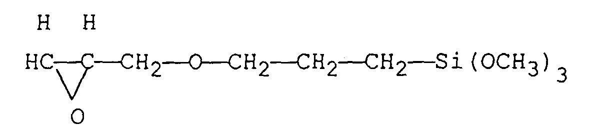 hergestellt werden,
und 1080 g einer wäßrigen Dispersion eines Flammrußes mit einer Primärteilchengröße von 15 nm und einem Festkörpergehalt von 21 Gew. % sowie 300 g einer wäßrigen Emulsion eines Siliconharzes der Formel

(Me₃SiO_{1/2})ₐ (MeSiO_{3/2})_{b}

mit einer Viskosität von 2 000 mPa·s, werden unter Rühren bei Raumtemperatur unter Normaldruck vermischt. Diese Mischung wird bei Raumtemperatur (25°C) und Normaldruck in einer Tauchwanne vorgelegt. Mit einer Pflatschwalze wird diese Emulsion auf ein nasses 235dtex Polyamidgewebe übertragen. Das beschichtete Gewebe durchläuft einen Wärmekanal, der in der ersten Zone eine Lufttemperatur von 100 °C und in einer zweiten Zone eine Lufttemperatur von 180 °C aufweist. Die Verweilzeit in diesem Wärmekanal ist 3 Minuten.
Es wird ein Gewebe mit einer Siliconbeschichtung von 34 g/m² erhalten.
Das Gewebe weist folgende Eigenschaften auf:
- Luftdurchlässigkeit nach DIN 53530:: 1,16 l/dm²/min.
- Haftung der Beschichtung nach DIN 53530:: 80 N/5 cm
- Scrub Test nach ISO 5981: mind. 600
- Brandgeschwindigkeit nach FMVSS 302: 45 mm/min
Die Brandgeschwindigkeit nach FMVSS 302 wird im horizontalen Brandtest bestimmt.

### Vergleichsbeispiel 2:

Die in Beispiel 1 beschriebene Vorgehensweise wird wiederholt, mit dem Unterschied, daß kein Ruß eingesetzt wird.
Es wird ein Gewebe mit folgenden Eigenschaften erhalten:
- Beschichtungsgewicht:: 18 g/m²
- Luftdurchlässigkeit nach DIN 53887:: 1,16 1/dm²/min.
- Haftung der Beschichtung nach DIN 53530:: 80 N/5 cm
- Scrub Test nach ISO 5981:: 600
- Brandgeschwindigkeit nach FMVSS 302: 70 mm/min Die Brandgeschwindigkeit nach FMVSS 302 wird im horizontalen Brandtest bestimmt.

### Beispiel 3:

Die in Beispiel 1 beschriebene Vorgehensweise wird wiederholt, mit dem Unterschied, daß die in Beispiel 1 beschriebene Formulierung an Stelle von Flammruß 200 g einer wäßrigen Dispersion von Furnaceruß mit einem Festkörpergehalt von 48 Gew. % und einer Primärteilchengröße von 27 nm enthält.

Beschichtet wurde ein 110 dtex Gewebe.
Es wird ein Gewebe mit folgenden Eigenschaften erhalten:
- Beschichtungsgewicht:: 17 g/m²
- Luftdurchlässigkeit nach DIN 53887:: 1,24/dm²/min.
- Haftung der Beschichtung nach DIN 53530:: 110 N/5 cm
- Scrub Test nach ISO 5981:: 800
Brandgeschwindigkeit nach FMVSS 302 selbstverlöschend Die Brandgeschwindigkeit nach FMVSS 302 wird im horizontalen Brandtest bestimmt.

### Beispiel 4:

Die in Beispiel 3 beschriebene Vorgehensweise wurde wiederholt, mit dem Unterschied, daß keine Rußdispersion zugesetzt wird.
Es wird ein Gewebe mit folgenden Eigenschaften erhalten:
- Beschichtungsgewicht:: 16 g/m²
- Luftdurchlässigkeit nach DIN 53887:: 1,22 l/dm²/min.
- Haftung der Beschichtung nach DIN 53530:: 100 N/5 cm
- Scrub Test nach ISO 5981:: 800
- Brandgeschwindigkeit nach FMVSS 302: 115 mm/min
Die Brandgeschwindigkeit nach FMVSS 302 wird im horizontalen Brandtest bestimmt.

## Patentansprüche

1. Wäßrige Emulsionen, dadurch gekennzeichnet, daß sie
(1) in den endständigen Einheiten SiC-gebundene Gruppen mit aliphatischen Mehrfachbindungen aufweisende Organopolysiloxane,
(2) mindestens 3 Si-gebundene Wasserstoffatome aufweisende Organopolysiloxane,
(3) die Anlagerung von Si-gebundenem Wasserstoff an aliphatische Mehrfachbindungen fördernden Katalysator,
(4) als Haftungsvermittler geeignete organische Siliciumverbindungen,
(5) Siliconharze,
(6) Emulgator und
(7) Wasser,
(8) Ruß
enthalten.

2. Wäßrige Emulsion nach Anspruch 1, dadurch gekennzeichnet, daß es sich bei den (1) endständige Einheiten SiC-gebundene Vinylgruppen aufweisenden Organopolysiloxanen um solche der allgemeinen Formel
(CH₂=CH)ₓSiR₃₋ₓ₋O(SiR₂O)ₙSiR₃₋ₓ(CH=CH₂)ₓ
handelt, wobei R gleiche oder verschiedene Kohlenwasserstoffreste bedeutet, die substituiert sein können und
X 1, 2 oder 3 und
n eine Zahl mit einem solchen Wert ist, daß die Diorganopolysiloxane (1) eine durchschnittliche Viskosität von 100 - 500 000 mPa·s bei 25 °C haben.

3. Wäßrige Emulsion nach Anspruch 1 oder 2, dadurch gekennzeichnet, daß es sich bei den (2) mindestens 3 Sigebundene Wasserstoffatome aufweisenden Organopolysiloxanen um solche der allgemeinen Formel
(CH₃)₃SiO-(SiHRO)ₒ-(SiR₂O)ₚ-Si(CH₃)₃
handelt, wobei R die oben angegebene Bedeutungen hat und o/p im Verhältnis 1:0 bis 1:20 liegt.

4. Wäßrige Emulsion nach einem oder mehreren der Ansprüche 1 bis 3, dadurch gekennzeichnet, daß es sich bei (5) den Siliconharzen um Siliconharze der allgemeinen Formel
(R₃SiO_{1/2})ₐ(RSiO_{3/2})_{b}, sogenannte MT-Harze und/oder MQ-Harze der allgemeinen Formel(R₃SiO_{1/2})ₐ(SiO_{4/2})_{b} handelt, wobei R die oben angegebene Bedeutung hat und das Verhältnis a zu b so gewählt wird, daß die Siliconharze in einem Viskositätsbereich von 30 - 300 000 mPa·s bei 25 °C liegen.

5. Verfahren zur Herstellung von wäßrigen Emulsionen nach einem oder mehreren der Ansprüche 1 bis 4, dadurch gekennzeichnet, daß die Bestandteile 1-7 emulgiert werden.

6. Vulkanisat, herstellbar unter Verwendung einer wäßrigen Emulsion, nach einem oder mehreren der Ansprüche 1 bis 4oder herstellbar nach Anspruch 5, indem die Emulsion erwärmt wird.

7. Verfahren zur Beschichtung von textilen Substraten, dadurch gekennzeichnet, daß wäßrige Emulsionen nach einem oder mehreren der Ansprüche 1 bis 4 oder herstellbar nach dem Verfahren nach Anspruch 5 auf ein Textil aufgebracht werden und die Emulsionen in einem Schritt auf textilen Substraten vulkanisiert und das beschichtete Textil getrocknet wird.

8. Beschichtete textile Substrate, dadurch gekennzeichnet, daß textile Substrate mit Emulsionen nach einem oder mehreren der Ansprüche 1 bis 4 oder herstellbar nach Anspruch 5, beschichtet sind.

9. Beschichtetes textiles Substrat, dadurch gekennzeichnet, daß das textile Substrate ein Airbagmaterial ist.
